# EUROPEAN PATENT SPECIFICATION

(11) **EP 1 566 797 B1**
(45) Date of publication and mention of the grant of the patent: **23.04.2008**
(21) Application number: 05003590.6
(22) Date of filing: 18.02.2005
(51) Int. Cl.: G06F 1/32, G11B 19/20

(54) **Method of controlling the idle mode of hard disc drives and apparatus therefor**
Verfahren um den Leerlauf von Plattenlaufwerken zu kontrollieren und Vorrichtung dafür
Procédé de contrôle du mode repos d'unité de disque dur et appareil associe

(30) Priority: 19.02.2004 KR 2004011007; 19.02.2004 KR 2004011008
(43) Date of publication of application: 24.08.2005
(73) Proprietor: SAMSUNG ELECTRONICS CO., LTD., Suwon-si, Gyeonggi-do (KR)
(72) Inventor: Sung-joong, Yun, Suwon-si Gyeonggi-do (KR); Jin-Wan, Jun, Seocho-gu Seoul (KR)
(74) Representative: Grünecker, Kinkeldey, Stockmair & Schwanhäusser Anwaltssozietät

(56) References cited:
- US-A- 4 991 129
- US-A- 5 517 649
- US-A- 5 652 891
- US-A1- 2003 218 820
- PATENT ABSTRACTS OF JAPAN vol. 015, no. 309 (P-1235), 7 August 1991 (1991-08-07) -& JP 03 109625 A (TOSHIBA CORP), 9 May 1991 (1991-05-09)

## Description

### BACKGROUND OF THE INVENTION

### 1. Field of the Invention

The present invention relates to a method of reducing power for a hard disc drive (HDD), and more particularly, to a method of setting an idle operation mode of an HDD according to a power type used by a host system, an apparatus suitable for the idle operation mode setting method, a method of setting a waiting time until a head is unloaded from an idle state of the HDD, and an apparatus suitable for the waiting time setting method.

### 2. Description of the Related Art

US 2003/0218820 A1 discloses an information storing device and an information processing device having a memory for registering a plurality of working modes at recording/reproduction and a switching circuit for selecting one of the plurality of working modes, which select the optimum working mode automatically or by an instruction of an operator according to power supply capacity of a device of higher rank to effect recording/reproduction. Furthermore, US 5,652,891 discloses a computer apparatus and external storage device which can be used by external power and internal power sources. In these devices a power safe process can be executed to reduce the electric power consumption.

A hard disc drive (HDD) is a recording apparatus used for storing information. Typically, data is recorded on concentric tracks on one surface of one or more magnetic recording discs. The discs are loaded on a spindle motor to be rotated, and data is accessed by a read/write head installed on an actuator arm rotated by a voice coil motor (VCM). The VCM moves the head by rotating an actuator by being excited by a current. The read/write head reads information recorded on a surface of a disc by sensing change of a magnetic field on the surface of the disc. To write data on tracks, a current is supplied to the head. The current generates a magnetic field, and then the magnetic field magnetizes the surface of the disc.

An HDD records/reproduces data in response to a command from a host system.

In the HDD, a method of unloading (parking) a head to save power in an idle state, that is, in a state of waiting for a command without performing a specific operation, is well known. In a state that the head is unloaded, since a current is not conducted to a VCM and a spindle motor stops, power consumption of the HDD is a minimum. An idle operation mode like this is necessary for saving power. However, when escaping from the idle state, a time for loading the unloaded head is required. Also, a possibility that a disc is damaged by the head during a loading/unloading operation is very high. Accordingly, the idle operation mode affects performance of the HDD negatively.

A host system including an HDD, and more particularly, a mobile system uses a general-use power source or a battery as a power source.

When the host system uses a battery, since a necessity for saving power is large, a necessity for unloading a head in an idle state of the HDD is large. However, when the host system uses the general-use power source (such as when external power is provided through a power generator) or where performance is important, it is preferable that the head remains loaded in the idle state.

It is necessary that an operating pattern in an idle state of an HDD (hereinafter, it is called "an idle operation mode" for convenience of description) and a waiting time (that is, a time until a head is unloaded from when the HDD enters into the idle state), vary according to usage environments of the HDD, that is, whether performance or power saving is the priority.

Some users mainly work with a word processor and a database. When working with a word processor, since the frequency of accessing an HDD is low, it is preferable that power saving is planned by unloading a head. However, when mainly working with a database, since the frequency of accessing the HDD is high, it is preferable that the HDD is not in the idle state or that the head remains loaded even though the HDD is in the idle state.

However, in conventional HDDs, the idle operation mode and the waiting time are uniformly set in all HDDs by HDD manufacturers, an operation in the idle state, and more particularly, the waiting time cannot be set according to usage environments of the HDDs.

### SUMMARY OF THE INVENTION

Additional aspects and/or advantages of the invention will be set forth in part in the description which follows and, in part, will be obvious from the description, or may be learned by practice of the invention.

An aspect of the present invention provides a method of controlling an idle operation mode of an HDD according to a power type used by a host system.

An aspect of the present invention also provides a method of controlling an HDD of a host system suitable for the method of controlling the idle operation mode.

An aspect of the present invention also provides a an HDD suitable for the method of controlling the idle operation mode.

An aspect of the present invention also provides an HDD of a host system suitable for of controlling the idle operation mode.

An aspect of the present invention also provides a computer-readable medium having recorded thereon a computer-readable program suitable for the method described above.

An aspect of the present invention also provides a method of setting an idle operation mode of an HDD according to usage environments of the HDD.

An aspect of the present invention also provides a method of controlling an HDD suitable for the idle operation mode setting method.

An aspect of the present invention also provides an HDD suitable for the idle operation mode setting method.

According to an aspect of the present invention, there is provided a method of controlling an idle operation mode of an HDD, the method comprising: if a power source used by a host system linked with the HDD is a general-use power source, prohibiting the use of a power saving operation mode even though the HDD is in an idle state; and if the power source used by the host system is a battery, allowing the use of the power saving operation mode when the HDD is in the idle state.

According to another aspect of the present invention, there is provided a method of controlling an HDD of a host system which is linked with the HDD, the method comprising: detecting whether a power source used by the host system is a general-use power source or a battery; and transmitting a type of the detected power source to the HDD.

According to another aspect of the present invention, there is provided a method of controlling an idle operation mode of an HDD, the method comprising: receiving data indicating a type of a power source used by a host system linked with the HDD; if the power source used by the host system is a general-use power source, prohibiting the use of a power saving operation mode even though the HDD is in an idle state; and if the power source used by the host system is a battery, allowing the use of the power saving operation mode when the HDD is in the idle state.

According to another aspect of the present invention, there is provided an HDD comprising: a host interface circuit receiving a command from a host system linked with the HDD; and a controller receiving the command transmitted via the host interface circuit and controlling an idle operation mode of the HDD.

According to an aspect of the invention, the controller receives a command including information indicating a type of a power source used by the host system via the host interface circuit, prohibits the use of a power saving operation mode even though the HDD is in an idle state if the power source used by the host system is a general-use power source, and allows the use of the power saving operation mode to be used when the HDD is in the idle state if the power source used by the host system is a battery.

According to another aspect of the present invention, there is provided a computer-readable medium having recorded thereon a computer-readable program for performing a method, the method comprising: receiving information indicating a type of a power source used by a host system linked with an HDD; if the power source used by the host system is a general-use power source, prohibiting the use of a power saving operation mode even though the HDD is in an idle state; and if the power source used by the host system is a battery, allowing the use of the power saving operation mode when the HDD is in the idle state.

According to another aspect of the present invention, there is provided a method of setting an idle operation mode of an HDD, which controls an operation mode in an idle state of the HDD, the method comprising: setting the idle operation mode of the HDD and a waiting time until a head is unloaded when the idle state is maintained; and transmitting the set information indicating the idle operation mode and the waiting time to the HDD.

According to another aspect of the present invention, there is provided a method of controlling an HDD, the method comprising: receiving an idle mode set command indicating an idle operation mode of the HDD and a waiting time until a head is unloaded when the idle state is maintained; setting a waiting time until a head is unloaded when the idle state is maintained according to the waiting time designated by the idle mode set command; and unloading a head of the HDD if a command is not transmitted to the HDD during the set waiting time.

According to another aspect of the present invention, there is provided an HDD comprising: a head which transfers data with respect to a disc; and a controller receiving an idle mode set command indicating a type of power source to which the HDD is connected and controls an idle operation mode of the HDD according to the indicated type.

Here, the controller receives an idle mode set command indicating an idle operation mode and a waiting time via the host interface circuit, sets a waiting time until a head is unloaded when the idle state is maintained according to the waiting time designated by the idle mode set command, and unloads a head of the HDD if a command is not transmitted to the HDD during the set waiting time.

### BRIEF DESCRIPTION OF THE DRAWINGS

These and/or other aspects and advantages of the invention will become apparent and more readily appreciated from the following description of the embodiments taken in conjunction with the accompanying drawings in which:
FIG. 1 is a schematic plan view of a hard disc drive (HDD);
FIG. 2 is a block diagram of a control unit controlling the HDD shown in FIG. 1;
FIG 3 is a flowchart of a method of controlling an idle mode of an HDD;
FIG. 4 is a flowchart of a method of controlling an idle mode of an HDD according to an embodiment of the present invention;
FIG 5 is a flowchart of a method of transferring a type of a power source used by a host system to the HDD in the method of FIG. 4;
FIG. 6 is a flowchart of an operation of an HDD in the method of FIG 4;
FIG 7 is a block diagram of an HDD according to an embodiment of the present invention;
FIG. 8 is a flowchart of a method of setting an idle mode of an HDD according to an embodiment of the present invention;
FIG. 9 is an interface screen provided by a set program; and
FIG. 10 is a flowchart of a method of controlling an HDD according to an embodiment of the present invention.

### DETAILED DESCRIPTION OF THE EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

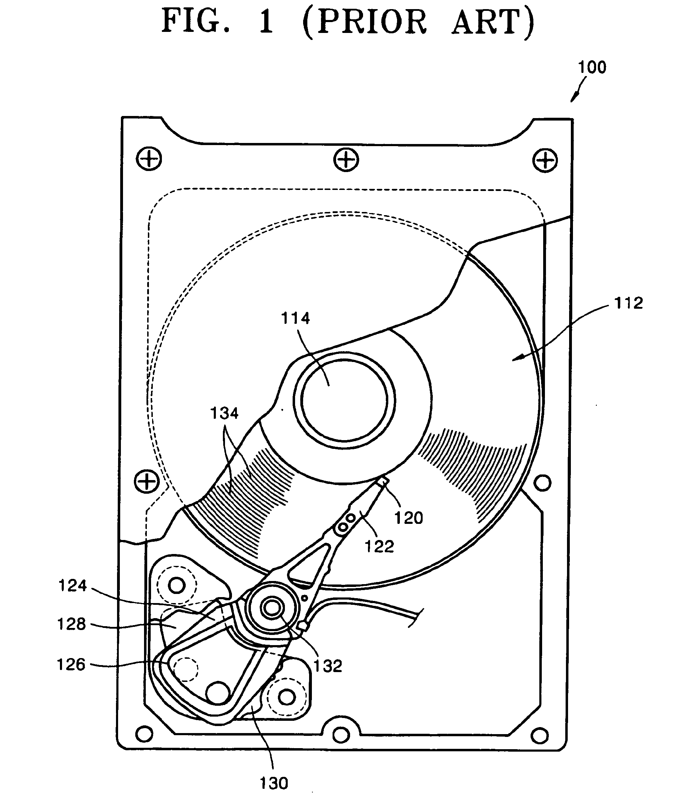

FIG. 1 is a schematic plan view of a hard disc drive (HDD) 100 used according to an aspect of the invention. Referring to FIG. 1, the HDD 100 includes at least one disc 112 rotated by a spindle motor 114. The HDD 100 also includes a head 120 adjacently located on a surface of the disc 112. The head 120 can read or write information from or on the rotating disc 112 by sensing a magnetic field formed on the surface of the disc 112 or magnetizing the surface of the disc 112. Though a single head 120 is shown in FIG. 1, the head 120 includes a write head which magnetizes the disc 112 and a read head which senses a magnetic field of the disc 112.

The head 120 generates an air bearing between the head 120 and the surface of the disc 112 based upon lift generated according to Bernoulli's principle due to the rotation of the disc 112. The head 120 is combined with a head stack assembly (HSA) 122. The HSA 122 is attached to an actuator arm 124 having a voice coil 126. The voice coil 126 is located adjacent to a magnetic assembly 128 specifying (supporting) a voice coil motor (VCM) 130. A current supplied to the voice coil 126 generates a torque which rotates the actuator arm 124 against a bearing assembly 132. The rotation of the actuator arm 124 moves the head 120 across the surface of the disc 112.

Information is stored in concentric tracks of the disc 112. In general, the disc 112 includes a data zone in which user data is recorded, a parking zone in which the head 120 is parked when the HDD 100 does not work, and a maintenance cylinder. In the maintenance cylinder, head types, write parameter compensation values (A and B) according to low and high temperatures, and write parameter compensation values (a and b) according to the head types are stored.

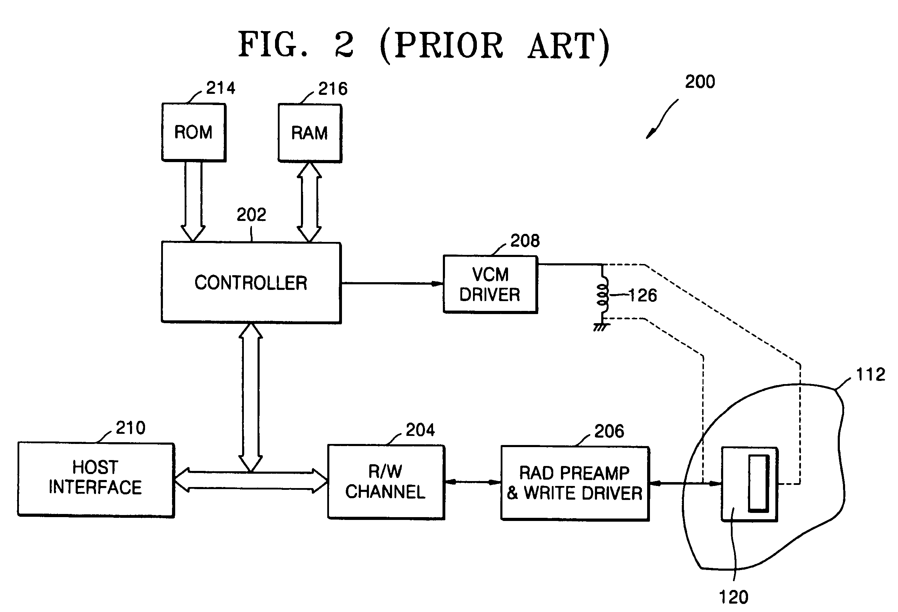

FIG. 2 is a block diagram of a control unit 200 controlling the HDD 100 shown in FIG. 1. Referring to FIG. 2, the control unit 200 includes a controller 202 connected to a head 120 through a read/write (R/W) channel circuit 204 and a read preamp & write driver circuit 206.
The controller 202 can be a digital signal processor (DSP), a microprocessor, or a micro controller. The controller 202 provides a control signal to the R/W channel circuit 204 in order to read data from a disc 112 or write data on the disc 112. Information is typically transmitted from the R/W channel circuit 204 to a host interface circuit 210. The host interface circuit 210 includes a control circuit interfacing to a hosts system, such as a personal computer (PC), notebook computer, personal digital assistant or other external device accessing the HDD 100.

The R/W channel circuit 204 converts an analog signal read by the head 120 and amplified by the read preamp & write driver circuit 206 into a digital signal that a host computer (not shown) can read and outputs the digital signal to the host interface circuit 210 in a read mode. Also, the R/W channel circuit 204 receives user data from the host computer via the host interface circuit 210, converts the user data into a write current to write the user data on the disc 112, and outputs the write current to the read preamp & write driver circuit 206 in a write mode.

The controller 202 is also connected to a VCM driver 208 supplying a driving current to a voice coil 126. The controller 202 provides a control signal to the VCM driver 208 in order to have a control of the VCM 130 and the head 120. The controller 202 is also connected to a read only memory (ROM) 214 or a nonvolatile memory, such as a flash memory, and a random access memory (RAM) 216. The memories 214 and 216 store commands and data used by the controller 202 for executing a software routine.

A control routine determining an idle status and a maintaining time and controlling operation modes is included in the software routine. When the HDD 100 is in an idle state, a method of parking the head 120 to save power is well known. Here, the idle state is when a command has not been transmitted from a host system to the HDD 100 during a predetermined period since an operation commanded by the host system was finished. In other words, the idle state is a state waiting for a command from the host system.

Operation modes of an HDD in the idle state can be divided as follows:

### 1) Max performance mode

In this mode, after an operation requested by the host system is finished, the head 120 remains in the data zone and follows a certain track. Therefore, in this mode, it is possible to immediately respond to an operation command transmitted from the host system.

### 2) Active idle mode

In this mode, after an operation requested by the host system is finished, the head 120 remains in the data zone. However, the head 120 floats and does not follow a specific track by turning off the VCM 130 and the read preamp and write driver circuit 206. Therefore, in this mode, when an operation command is transmitted from the host system, after the blocks which were turned off are then turned on, the HDD 100 responds to the operation command.

### 3) Low power idle mode

In this mode, after an operation requested by a host system is finished, power consumption is minimized by unloading a head and turning off the VCM 130, the read preamp and write driver circuit 206, and a R/W channel circuit 204. Therefore, in this mode, when an operation command is transmitted from the host system, after the head 120 is loaded in the data zone and the blocks which were turned off are then turned on, the HDD 100 responds to the operation command. In particular, since the head loading/unloading operation is accompanied, a response time while operating in response to a command transmitted from the host system is long. Accordingly, if this mode is frequently used, performance of the HDD 100 decreases. A response delay for operations, such as power-on of the relevant blocks, loading, and target track seeking, is statistically around 0.5-1 second. Also, in this mode, since the head 120 moves between the data zone and the parking zone through loading/unloading operations, there is a high possibility that the disc 112 is damaged by the head 120.

Typically, after an operation requested from a host system is finished, the HDD 100 gradually raises a power saving grade in order of the max performance mode, the active idle mode, and the low power mode.

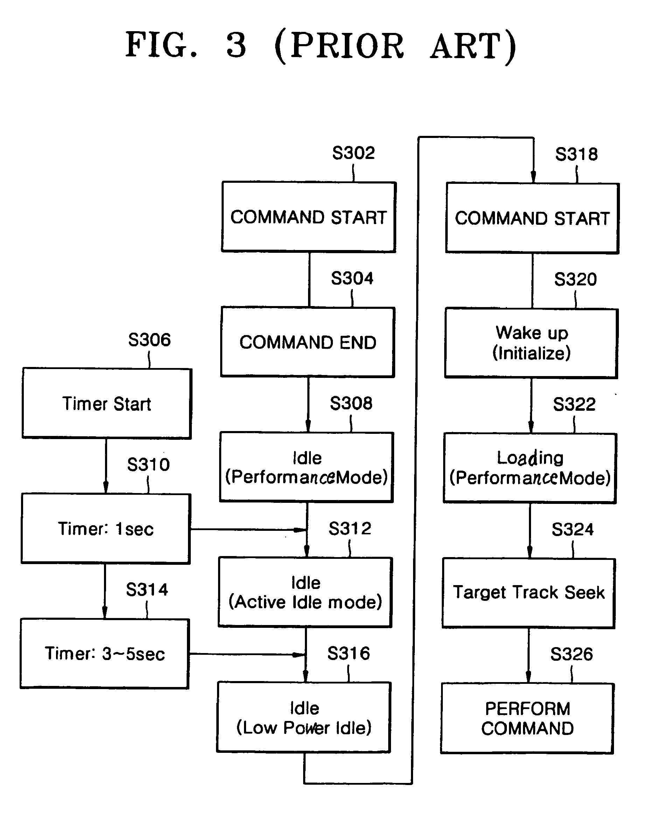

FIG. 3 is a flowchart of a method of controlling an idle mode of the HDD 100. When a command is finished (that is, when an operation requested by a host system is finished), a timer (not shown) for determining a maintaining time of an idle state begins counting, and the HDD 100 is in the max performance mode in operations S302, S304, S306 and S308.

If the maintaining time of the idle state exceeds 1 second, the HDD 100 is in the active idle mode in operations S310 and S312. If the maintaining time of the idle state exceeds 3 seconds, the HDD 100 is in the low power mode in operations S314 and S316.

If a command is transmitted from the host system in operation S318, a waking up process is performed in operation S320, a loading process is performed in operation S322, a target track seeking process is performed in operation S324, and an operation requested by the command is performed in operation S326.

In a case of a mobile computer, according to statistical data, a time that the HDD 100 is in the low power mode occupies over 50% of a total used time. Accordingly, a response delay due to the low power mode, and more particularly, a response delay due to a head loading time deteriorate the performance of the HDD.

Therefore, when a power saving demand is not so large since a general-use power source is used (i.e., a power source such as a power from a power generator used for multiple devices of different types such as power provided across a power grid), it is preferable, but not required, for performance improvement that the head 120 is loaded. In particular, when maximum performance is required, it is preferable that an HDD 100 maintains the max performance mode regardless of a maintaining time of the idle state.

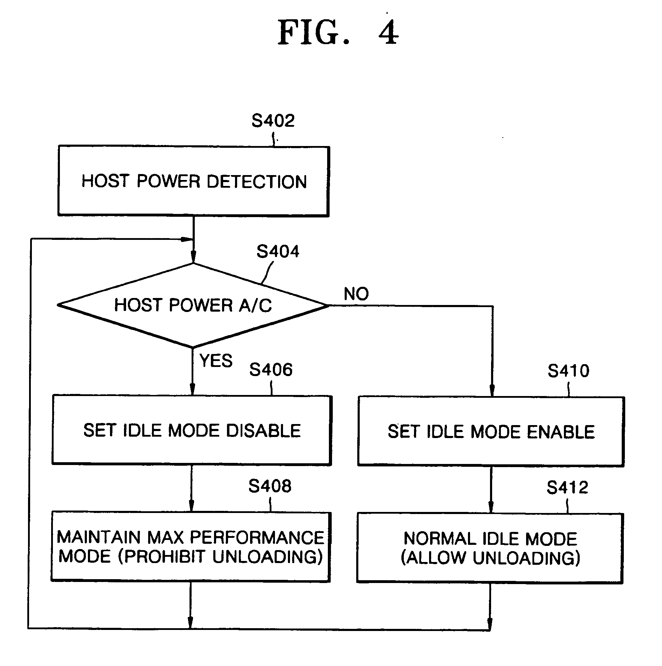

FIG. 4 is a flowchart of a method of controlling an idle mode of an HDD according to an embodiment of the present invention. It is detected whether a power source used for a host system is a general-use power source or a battery in operation S402. A method of determining a type of the used power source is well known to an emergency power supply and a mobile computer, and mainly detects a voltage level of the general-use power source, voltage variance, or whether a plug for supplying the general-use power source is inserted. However, it is understood that other mechanisms can be used, such as input received from the user.

It is determined whether the power source used for the host system is the general-use power source in operation S404. If the power source used for the host system is the general-use power source in operation S404, the idle mode is set to a disable status in operation S406. Accordingly, an HDD operates in a mode in which the HDD 100 can immediately respond to a command transmitted from the host system regardless of a maintaining time of the idle state, for example, the max performance mode in operation S408. In this mode, head unloading is prohibited. However, it is understood that other modes, such as mode S312, can be used.

If the power source used for the host system is the battery in operation S404, the idle mode is set to an enable status in operation S410. Accordingly, the HDD performs a normal idle operation in operation S412. That is, according to the maintaining time of the idle state, the max performance mode, the active idle mode, and the low power mode are sequentially performed using the method of FIG. 3. In this mode, head unloading is permitted.

Typically, the HDD 100 operates using a fixed voltage supplied from a host system and does not have an apparatus to detect a type of a power source used for the host system. Also, since the idle operation mode is controlled by the HDD 100, in order to control the idle operation mode in the HDD based on the type of the power source used for the host system, the host system must transmit information indicating the type of the power source being used to the HDD 100 according to an aspect of the invention. However, where the HDD 100 has an independent power supply, it is understood that the HDD 100 can have a power source detector according to aspects of the invention.

This operation can be performed through an at attachment packet interface (ATAPI) command. For this purpose, a SMART command (command code: B0h) of ATA mandatory commands can be used. The SMART command of the ATA mandatory commands uses a value of a feature register as a subcommand, and operations depend on this value. An E0h-FFh field of the feature register is available for manufacturers.

When the host system is initialized or when the type of the power source used for the host system is changed, the host system transmits information regarding the type of the power source used for the host system to the HDD 100 using the ATAPI command, and the HDD 100 controls the idle operation mode in response to the command. However, it is understood that other commands can be used or developed instead of or in addition to the ATAPI command.

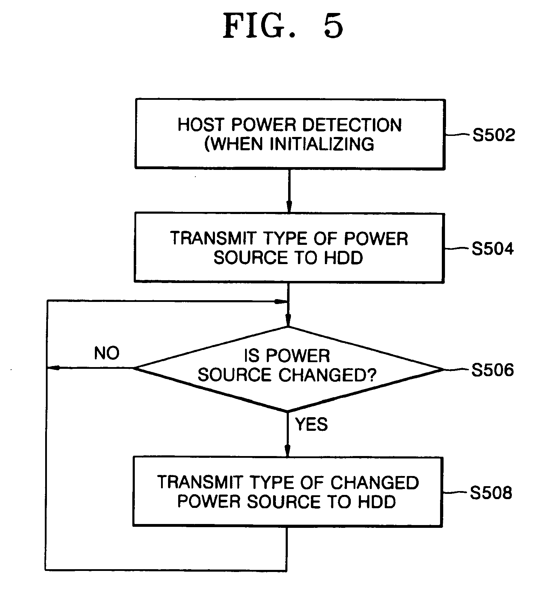

FIG. 5 is a flowchart of a method of transferring a type of a power source used by a host system to the HDD 100 in the method of FIG. 4 according to an aspect of the invention. When the host system is initialized, the host system detects a type of a power source being used in operation S502. The host system transmits information indicating the detected power source type to the HDD 100 using an ATAPI command sent through circuit 210 in operation S504. When the type of the power source being used is changed in operation S506, the host system transmits the changed power source type to the HDD 100 in operation S508.

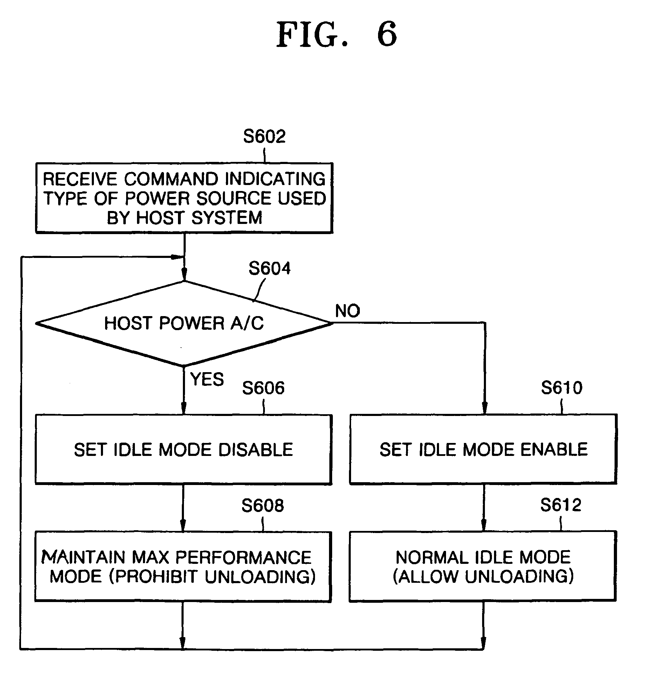

FIG. 6 is a flowchart of an operation of the HDD 100 in the method of FIG. 4 according to an aspect of the invention. The HDD receives an ATAPI command including information indicating a type of a power source that a host system is using from the host system in operation S602. The HDD 100 determines whether the power source that the host system is using is a general-use power source in operation S604. If the power source that the host system is using is the general-use power source in operation S604, the HDD sets the idle mode disable in operation S606. The HDD maintains the max performance mode (that is, a mode in which maximum performance can be provided in the idle state) in operation S608. It is preferable, but not required, that unloading a head in the idle state is prohibited in the max performance mode.

If the power source that the host system is using is a battery in operation S604, the HDD 100 sets the idle mode enable in operation S610. The HDD 100 performs the normal idle mode described in FIG. 4 in operation S612. In the normal idle mode, unloading the head 120 in the idle state is permitted according to the method in FIG. 3.

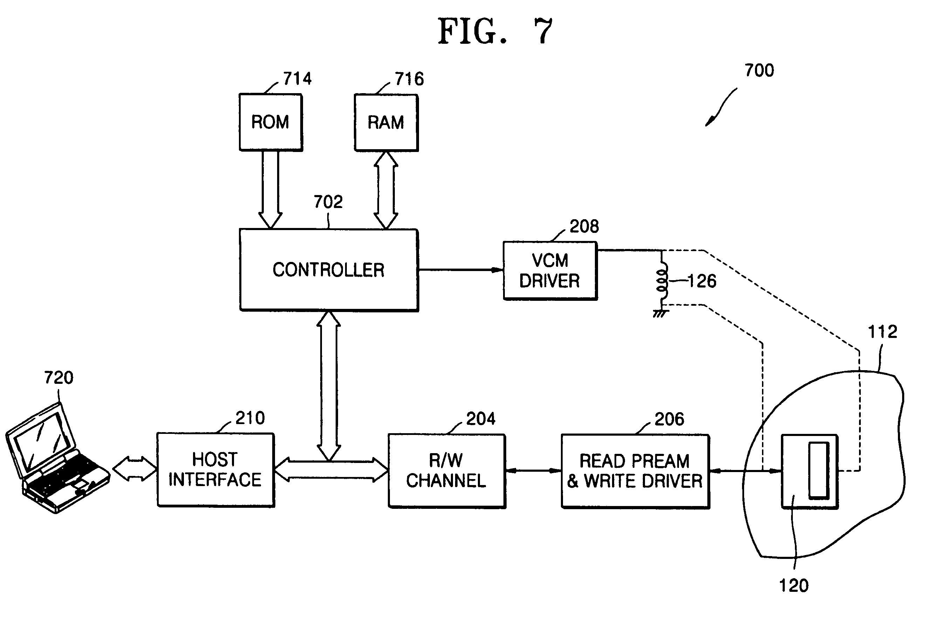

FIG. 7 is a block diagram of the HDD 700 according to an embodiment of the present invention. In the apparatus shown in FIG. 7, like reference numbers are used to refer to like elements performing the same operations with the apparatus shown in FIG. 2, and detailed description for them is omitted. The controller 702 is connected to a ROM 714 or a nonvolatile memory, such as a flash memory, and a RAM 716. The memories 714 and 716 store commands and data used by the controller 702 for executing a software routine. A control routine determining an idle operation mode according to a type of a power source that a host system 720 is using as shown in FIG. 6 is included in the software routine.

The controller 702 receives a command including information indicating the type of the power source that the host system 720 is using via the host interface circuit 210. The controller 702 controls the idle operation mode by analyzing this command.

If the power source that the host system 720 is using is a general-use power source, the controller 702 maintains a mode in which the HDD 700 can immediately perform a command transmitted from the host system 720 in the idle state regardless of a maintaining time of the idle state. Unloading a head in the idle state is prohibited.

If the power source that the host system is using is a battery, the controller 702 maintains a mode in which the HDD 700 can reduce power consumption in the idle state. It is preferable, but not required, that it is permitted to unload the head in the idle state.

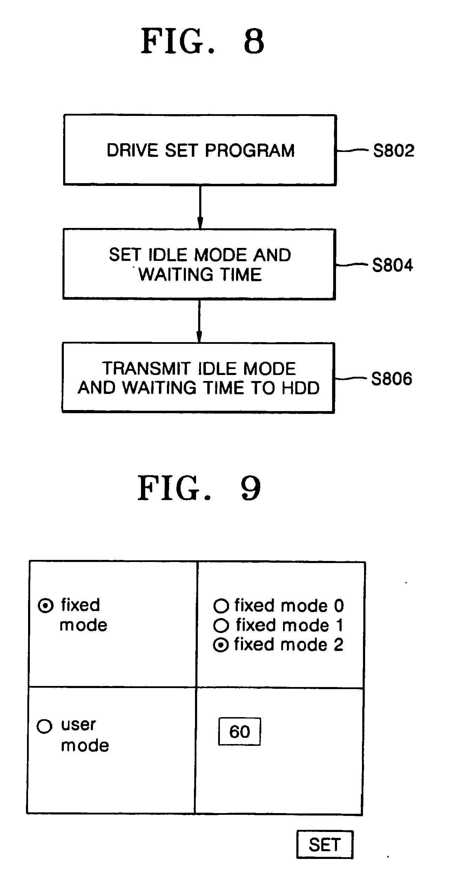

FIG. 8 is a flowchart of a method of setting an idle mode of the HDD 700 according to an embodiment of the present invention. A user executes a program for setting an idle mode in the host system 720 in S802. This program can be provided by an HDD manufacturer as a bundle program or otherwise obtained. Also, this program is provided as an application program in most cases. However, this program can be provided as a low level command, such as a DOS (trademark of the Microsoft Corporation) command.

Using the set program, an idle operation mode and a waiting time are set in operation S804. Here, the idle operation mode is a mode in which a time set by the program is adapted. In the embodiment of the present invention, the idle operation mode includes a fixed mode and a user mode. Also, the waiting time is a period from the beginning of the idle state to the unloading of a head.

In the fixed mode, even if a power source supplied to the HDD 700 turns off and on, the HDD 700 performs the idle operation after a time set by the set program. In the user mode, although the HDD 700 performs the idle operation after a time set by the set program, if the power source supplied to the HDD 700 is turned off, the HDD 700 executes the idle operation after a time set in the fixed mode.

FIG. 9 is an interface screen provided by the set program according to an aspect of the invention. Referring to FIG. 9, a user can select the fixed mode or the user mode by selecting one of buttons located on the left side of the screen. The fixed mode includes three sub modes. Each of the sub modes is selected by selecting one of buttons located on the center of the screen. In the embodiment of FIG. 9, the waiting times of 5, 10, and 15 seconds are allocated to the fixed modes 0 through 2, respectively. If the user selects the fixed mode 2, the HDD 700 is in the low power mode in 10 seconds after receiving a command from a host system is finished.

In the user mode, the user can set the waiting time in a predetermined range, (i.e., in a range of 600 seconds in the shown example) according to an aspect of the present invention. The user can set the waiting time using an input window located on the center of the screen. It is understandable that the waiting time is not limited to a range of 1- 600 seconds but can be variable.

According to an aspect of the present invention, the fixed mode and the user mode are divided into groups by considering use of the environments of the HDD 700. In other words, when the HDD 700 is used for a word processor in which a frequency of accessing the HDD 700 is low, the fixed mode is used to raise a power saving effect by setting the waiting time as short as possible. However, when the HDD 700 is used for work related to a database in which a frequency of accessing the HDD 700 is high, the user mode is used to raise the performance by temporarily setting the waiting time to a proper value. The set value is activated by a set button located on the lower part of the screen.

When the set button is pushed, a set program transmits idle set information, i.e., the set idle operation mode and waiting time, to the HDD 700. It is understandable that the idle set information can contain only set idle operation mode, and/or that a waiting time can be used as a default waiting time such as 5 seconds. While not required, this operation in which the set program transmits the idle set information to the HDD 700 can be performed through the ATAPI command according to an aspect of the invention. For this purpose, the SMART command (command code: B0h) of the ATA mandatory commands can be used. However, other commands and protocols can be used and/or developed.

The SMART command of the ATA mandatory commands uses a value of the feature register as a subcommand, and operations are dependent on this value. An E0h-FFh field of the feature register is available for manufacturers.

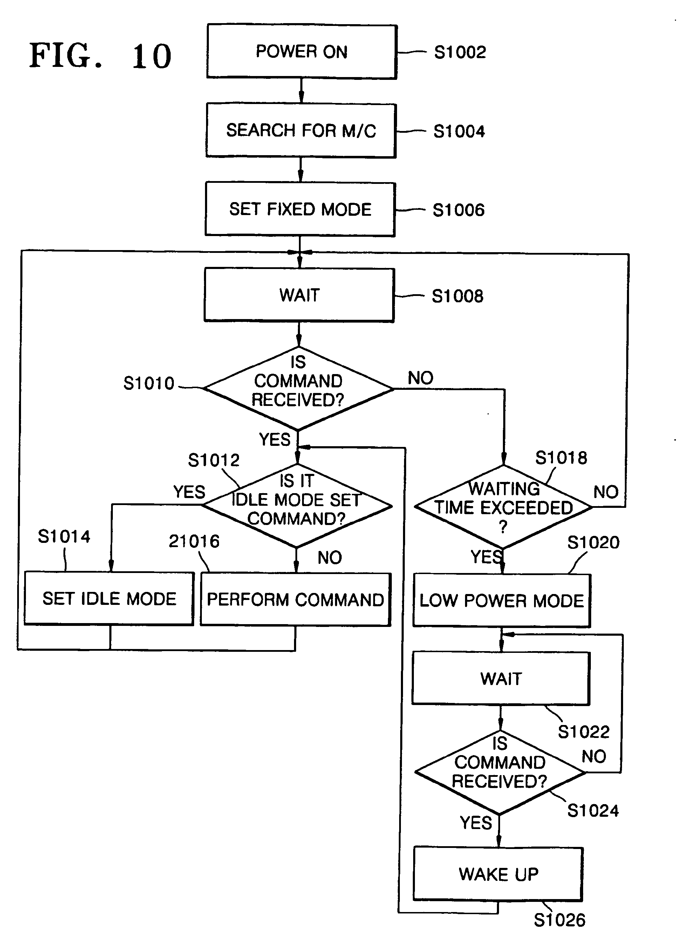

FIG. 10 is a flowchart of a method of controlling an HDD according to an embodiment of the present invention. When an HDD is initialised in operation S1002, a controller searches for a waiting time of the fixed mode stored in a maintenance cylinder in operation S1004. The waiting time of the idle mode is set to the searched waiting time of the fixed mode in operation S1006. Accordingly, the waiting time from the maximum performance mode to the low power mode shown in FIG. 4 is set to the waiting time of the fixed mode stored in the maintenance cylinder.

The HDD waits for a command transmitted from a host system (hereinafter, an idle mode set command for convenience of description) in operation S1008. In operation S1006, the HDD is in the maximum performance mode. When a command is received in operation S1010, the HDD determines whether the command is the idle mode set command in operation S1012. If the command is the idle mode set command in operation S1012, the idle mode and the waiting time of the HDD are set to a set mode and a waiting time included in the command in operation S1014, and this process returns to operation S1008.

If the command is the idle mode set command for setting the fixed mode, the HDD writes the waiting time of the fixed mode on the maintenance cylinder and sets the idle mode and the waiting time. If the command is the idle mode set command for setting the user mode, the HDD only sets the idle mode and time. Through operations 1004, 1006 and 1014, whenever the HDD is initialized, the fixed mode is set, and while the HDD is operating, the fixed mode or the user mode is set.

If the command is not the idle mode set command in operation S1012, the command is performed in operation S1016, and this process returns to operation S1008.

If a command is not received in operation S1010, the HDD determines whether the waiting time exceeds the set time in operation S1018. If the waiting time does not exceed the set time in operation S1018, this process returns to operation S1008. If the waiting time exceeds the set time in operation S1018, the lower power mode starts in operation S1020. Accordingly, a head is unloaded, a VCM and an analog-to-digital converter (ADC) supplying a driving current to the VCM are turned off, and a power source supplied to a clock generator, a read/write channel circuit and a preamp is cut off.

The HDD is idle until a command is transmitted from the host system in operation S1022. If a command is received in operation S1024, the HDD performs a waking up operation in operation S1026, and this process returns to operation S1012. Accordingly, a power source is supplied to the clock generator, the read/write channel circuit and the preamp, the VCM and the ADC supplying a driving current to the VCM are turned on, and the head is loaded from the parking zone to the data zone.

A method of setting the idle mode of an HDD according to an embodiment of the present invention will now be described with reference to the apparatus shown in FIG. 7. The controller 702 is connected to the ROM 714 or a nonvolatile memory, such as a flash memory and the RAM 716. The memories 714 and 716 store commands and data used by the controller 702 for executing a software routine.

A control routine determining an idle operation mode according to a type of a power source that the host system 720 is using as shown in FIG. 10 is included in the software routine. The controller 702 receives an idle mode set command via the host interface circuit 210. The controller 702 controls the idle operation mode by analyzing this command.

The present invention can be realized as a method. When the present invention is realized as software, components of the present invention are embodied as code segments for executing required operations. A program or the code segments can be stored in a processor-readable recording medium and transmitted as computer data signals combined with a carrier using a transmission medium or a communication network. The processor-readable recording medium is any data storage device that can store or transmit data which can be thereafter read by a computer system. Examples of the processor-readable recording medium include electronic circuits, semiconductor memory devices, read-only memory (ROM), flash memory, erasable ROM, floppy disks, optical discs, hard discs, optical fiber media, and RF networks. The computer data signals include any signal which can be propagated via transmission media such as electronic network channels, optical fibers, air, electronic fields, RF networks.

While described in terms of a battery, it is understood that the non-general-use power source can be a solar power cell, a fuel cell or other power supplies having a limited ability to supply voltage over protracted periods of time.

As described above, a method of controlling an idle operation mode of an HDD according to an embodiment of the present invention allows performance of the HDD to be maintained by maintaining a load on a head when a power source that a host system is using is a general-use power source.

Also, a method of setting an idle operation mode of an HDD according to an embodiment of the present invention allows an appropriate operation mode to be realized according to the use of the environment of the HDD by allowing a user to set an idle mode of the HDD and a waiting time until a head is unloaded.

While this invention has been particularly shown and described with reference to embodiments thereof, it will be understood by those skilled in the art that various changes in form and details may be made therein within the scope of the invention as defined by the claims. The preferred embodiments should be considered in descriptive sense only and not for purposes of limitation. Therefore, the scope of the invention is defined not by the detailed description of the invention but by the claims.

Although a few embodiments of the present invention have been shown and described, it would be appreciated by those skilled in the art that changes may be made in these embodiments within the scope of the claims.

## Claims

1. A method of setting an idle operation mode of an hard disc drive (HDD)which controls an operation mode in an idle state of the HDD, the method comprising:
setting the idle operation mode of the HDD out of a fixed mode and a user mode and a predetermined waiting time until a head of the HDD is unloaded from when the HDD enters into the idle state, wherein, in the user mode, a user can set the waiting time in a predetermined range; and
transmitting the set information indicating the idle operation mode and the waiting time to the HDD.

2. The method of claim 1, wherein the type of the power source used by the host system is transmitted to the HDD using an ATAPI command.

3. The method of claim 1 or 2, wherein the idle operation mode is selectable between a fixed mode, in which the waiting time of the HDD is set to the waiting time set by the set information whenever the HDD is turned on, and a user mode in which the waiting time of the HDD is set to the waiting time set by the set information only from when the HDD receives the set information when the HDD is turned off.

4. The method of claim 3, wherein the ATAPI command is usable by manufacturers.

5. A computer-readable medium having recorded thereon a computer-readable program for performing a method according to claim 1 implemented by a computer.

## Patentansprüche

1. Verfahren zum Einstellen eines Leerlauf-Betriebsmodus eines Festplattenlaufwerks, mit dem ein Betriebsmodus in einem Leerlaufzustand des Festplattenlaufwerks gesteuert wird, wobei das Verfahren umfasst:
Einstellen des Leerlauf-Betriebsmodus des Festplattenlaufwerks aus einem Fest-Modus und einem Benutzer-Modus heraus und einer vorgegebenen Wartezeit, bis ein Kopf des Festplattenlaufwerks abgehoben wird, wenn das Festplattenlaufwerk in den Leerlaufzustand übergeht, wobei in dem Benutzer-Modus ein Benutzer die Wartezeit in einem vorgegebenen Bereich einstellen kann; und
Senden der Einstellungsinformationen, die den Leerlauf-Betriebsmodus und die Wartezeit anzeigen, zu dem Festplattenlaufwerk.

2. Verfahren nach Anspruch 1, wobei der Typ der Stromquelle, die von dem Host-System verwendet wird, unter Verwendung eines ATAPI-Befehls zu dem Festplattenlaufwerk gesendet wird.

3. Verfahren nach Anspruch 1 oder 2, wobei der Leerlauf-Betriebsmodus zwischen einem Fest-Modus, in dem die Wartezeit des Festplattenlaufwerks auf die durch die Einstellungsinformationen eingestellte Zeit eingestellt wird, wenn das Festplattenlaufwerk angeschaltet wird, und einem Benutzer-Modus ausgewählt werden kann, in dem die Wartezeit des Festplattenlaufwerks auf die durch die Einstellungsinformationen eingestellte Wartezeit nur von dem Zeitpunkt an eingestellt wird, zu dem das Festplattenlaufwerk die Einstellungsinformationen empfängt, wenn das Festplattenlaufwerk abgeschaltet wird.

4. Verfahren nach Anspruch 3, wobei der ATAPI-Befehl von Herstellern verwendet werden kann.

5. Computerlesbares Medium, auf dem ein computerlesbares Programm zum Durchführen des Verfahrens nach Anspruch 1 aufgezeichnet ist, das von einem Computer implementiert wird.

## Revendications

1. Procédé pour définir un mode de fonctionnement de repos d'un disque dur (HDD) qui contrôle un mode de fonctionnement dans un état au repos du disque dur HDD, le procédé comprenant les étapes consistant à :
définir le mode de fonctionnement au repos du HDD parmi un mode fixé et un mode utilisateur et un temps d'attente prédéterminé jusqu'à ce qu'une tête du HDD soit non chargée depuis le moment où le HDD entre dans l'état au repos, où, dans le mode utilisateur, un utilisateur peut définir le temps d'attente dans une plage prédéterminée ; et
transmettre les informations définies indiquant le mode de fonctionnement au repos et le temps d'attente au HDD.

2. Procédé selon la revendication 1, dans lequel le type de la source de puissance utilisée par le système hôte est transmis au HDD à l'aide d'une commande ATAPI.

3. Procédé selon la revendication 1 ou 2, dans lequel le mode de fonctionnement au repos peut être sélectionné entre un mode fixé, dans lequel le temps d'attente du HDD est fixé au temps d'attente défini par les informations fixées à chaque fois que le HDD est allumé, et un mode utilisateur dans lequel le temps d'attente du HDD est fixé au temps d'attente défini par les informations fixées uniquement à partir du moment où le HDD reçoit les informations fixées lorsque le HDD est éteint.

4. Procédé selon la revendication 3, dans lequel la commande ATAPI est utilisable par des fabricants.

5. Support lisible par un ordinateur sur lequel est enregistré un programme lisible par un ordinateur pour exécuter un procédé selon la revendication 1, mis en oeuvre par un ordinateur.
